# EUROPEAN PATENT APPLICATION

(11) **EP 1 557 976 A1**
(43) Date of publication of application: **27.07.2005**
(21) Application number: 05300040.2
(22) Date of filing: 18.01.2005
(51) Int. Cl.: H04L 12/18, H04L 12/56

(54) **Method and apparatus for multicasting of cell or frame data**

(30) Priority: 20.01.2004 US 760624
(71) Applicant: ALCATEL, 75008 Paris (FR)
(72) Inventor: ROBOTHAM, Robert Elliott, OTTAWA, Ontario K1H 5L8 (CA)
(74) Representative: Feray, Valérie

(57) **Abstract**

One or more embodiments of the present invention provide a method and apparatus for multicasting of data, for example, cell data (202) or frame data, with the ability to dynamically manage such multicasting. A data structure, referred to as a to-do list (206), is maintained with entries for enqueued data elements (209,210,211). To-do list entries (209,210,211) include a data element pointer (207) identifying the corresponding data element (203,204,205) and a leaf to be processed pointer (208) indicating the progression of transmission of the corresponding data element (203,204,205) to the plurality of leaves (220,221,222,223) of a multicast tree (234), wherein the plurality of leaves (220,221,222,223) are used to transmit the data (203,204,205) to a plurality of multicast destinations. A method for counting copies of each data element (203,204,205) as they are transmitted to each of the plurality of leaves (220,221,222,223) is performed so as to accommodate the addition or deletion of one or more multicast leaves during the multicasting process.

## Description

The present invention relates generally to multicasting data, for example, cells or frames, from a data source to multiple destination queues, and, more particularly, to such multicasting with the ability to make copies of the data quickly and to add and delete leaves (i.e., multicast destinations) from the multicast tree while in operation.

Networks are used to communicate data among various locations, which may be referred to as nodes. In some cases, data are communicated from a single source node to a single destination node. Such point-to-point communication is referred to as unicast transmission. In other cases, data are communicated to a plurality of destination nodes. Such point-to-multipoint communication is referred to as multicast transmission. Multicasting may be used to provide data to separate output ports of a router/switch for communication to multiple destinations, which is referred to as spatial multicasting, or multiple copies of the data may be provided to a single output port (and optionally one or more additional copies may be provided to one or more additional output ports), which is referred to as logical multicasting. In order to provide multicast transmission, some indication of what destination nodes are to receive the data is needed. The manner in which routing information to enable a multicast transmission is managed can affect the ability to control the distribution of the multicast data.

The need to provide multicasting functionality is growing as the amount of broadcast data (e.g., streaming audio and video data) in the network grows. Users surfing the Internet and sampling various forms of broadcast media, much like television viewers surfing TV channels, create a further need for switches/routers to be able to easily change multicast trees during a broadcast. Therefore, such capability would be a desirable feature to include in switches/routers. However, existing switches/routers typically do not provide for efficient dynamic management of multicast destinations or, more particularly, the multicast trees used to transmit data to those multicast destinations.

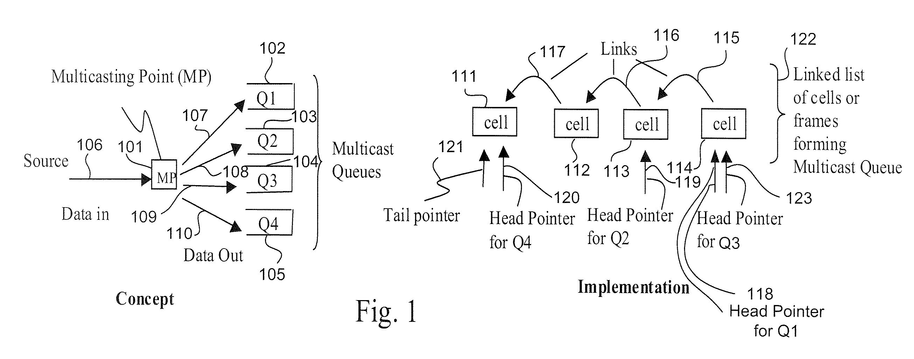

Figure 1 is a block diagram illustrating a technique for multicasting. According to such a technique, a multicast queue, formed by a linked list of data elements, such as cells or frames, is accessed according to respective head pointers by processes serving multicast destination queues. Schematically, the multicast transmission involved receiving a source data stream 106 at a multicasting point 101 and providing a plurality of destination streams 107, 108, 109, and 110 to a plurality of multicast queues 102, 103, 104, and 105, respectively. From the multicast queues 102, 103, 104, and 105, the destination streams are forwarded to their respective destinations. To achieve such operation, a linked list 122 of data elements 111, 112, 113, and 114 is created and maintained. Links 115, 116, and 117 are used to form the linked list 122. Link 115 links data element 114 to data element 113. Link 116 links data element 113 to data element 112. Link 117 links data element 112 to data element 111. Pointer 118 serves as a head pointer for multicast queue 102 and points to data element 114. Pointer 119 serves as a head pointer for multicast queue 103 and points to data element 113. Pointer 123 serves as a head pointer for multicast queue 104 and points to data element 114. Pointer 120 serves as a head pointer for multicast queue 105 and points to data element 111. Tail pointer 121 points to data element 111, which is at the end of the linked list 122.

Such a technique is best suited for relatively static multicast trees (e.g., distribution of video data for the relatively long duration of a movie), in which the addition and deletion of multicast destinations is minimal, and in which all of the data arriving at the multicast point (i.e., the point from which the data is distributed to the multicast destinations) is going to all of the multicast destinations. When so employed, such a technique is implemented by transmitting each data element included in the linked list to all of the multicast destinations. However, without a provision to update the multicast destinations in a timely manner, the data would continue to be transmitted to destinations no longer desiring to receive the data, and additional destinations wishing to be included in the distribution could not, but rather either a new multicasting tree would have to be created for such additional destinations or such additional destinations would have to wait for potentially substantial periods of time before they could begin receiving the data.

Thus, a technique is needed to allow multicasting to be performed so as to allow dynamic management of multicast destinations.
A first object of the invention is a method for multicasting data comprising:
adding the data to a queue; placing a reference to the data and to a multicast tree into a to-do list; for each of the leaves of the multicast tree, obtaining a data element pointer and a leaf to be processed pointer from the to-do list; and scheduling the data to be output to each of the leaves of the multicast tree based on the data element pointer and the leaf to be processed pointer.
A second object of the invention is a method for multicasting data comprising:
adding the data to a queue as enqueued data; transmitting the enqueued data to each of a plurality of multicast destinations; determining that all of the enqueued data for a particular destination of the multicast destinations have been transmitted.
A third object of the invention is a method for multicasting data comprising:
storing queue context information and data context information pertaining to the data;
determining which of the data to transmit as output data and a destination to which it shall be transmitted based on the queue context information and the data context information; transmitting the output data to the destination; determining a number of destinations to which the output data has been transmitted; and determining a number of destinations intended to receive the output data.
The present invention relates also to an apparatus for multicasting data comprising:
a queuing element for receiving the data and for transmitting the data to a plurality of multicast destinations via a plurality of destination queues; a memory subsystem for storing the data, queue context information pertaining to a root connection, data context information pertaining to the data, a data element pointer, and a leaf to be processed pointer; and a scheduler for scheduling a dequeuing event for the data.

The present invention may be better understood, and its features made apparent to those skilled in the art by referencing the accompanying drawings.

Figure 1 is a block diagram illustrating a technique for multicasting.

Figure 2 is a block diagram illustrating a method and apparatus for multicasting in accordance with at least one embodiment of the present invention.

Figure 3 is a flow diagram illustrating a method for multicasting in accordance with at least one embodiment of the present invention.

Figure 4 is a block diagram illustrating an apparatus for multicasting in accordance with at least one embodiment of the present invention.

Figures 5A, 5B, and 5C are a flow diagram illustrating a method for multicasting in accordance with at least one embodiment of the present invention.

The use of the same reference symbols in different drawings indicates similar or identical items.

In accordance with at least one embodiment of the present invention, the concept of a "queue" is divided into two aspects; one is the queuing structure, and the other is related to the scheduling of the queue for servicing.

The queuing structure comprises a pointer to indicate the next piece of data (e.g., a cell, a frame, or a fragment of a frame) to be serviced, commonly called the head pointer, and a pointer to indicate where to attach any next piece of data to arrive, commonly called the tail pointer. Furthermore the data that is in the queue may be stored as data elements that are organized as a linked list. Each data element may contain a fixed size cell, a number of fixed size cells, a frame (i.e., variable size packet), or a portion of a frame. In accordance with at least one embodiment of the present invention, an additional piece of information is associated with the data elements. An example of that additional piece of information is a count indicating how many copies of the data stored in the element are to be made and, hence, how many times the data is to be read before it can be returned to the free memory pool.

Also in accordance with at least one embodiment of the present invention, while the queuing structure of a unicast queue or a multicast root queue is as described above, a leaf queue has a different structure. The root queue has a tail pointer to allow the attachment of arriving data to the queue, and the leaves only follow the linked list and therefore do not require a tail pointer. The leaves can, however, store a pointer to the root queue.

At least one embodiment of the present invention also adds a next leaf pointer to the queuing structure for each queue. If the pointer points to the queue itself, then it is either a unicast queue or the last leaf of a multicast tree. Data arriving at a queuing point will be associated with only unicast queues or the root of a multicast tree. The association with the leaf queues occurs through aspects of at least one embodiment of the present invention. The next leaf pointer is used to construct multicast trees.

The scheduling context of the queue comprises information related to the servicing of the queue and may contain such information as servicing weight, rates, and/or allowable burst sizes, etc., and information regarding where the queue is to be scheduled (e.g., what port). It also contains data structures required for the operation of the scheduler itself, which may include such items as links to point to other queues in the scheduler.

In accordance with at least one embodiment of the present invention, the scheduling context also comprises a count of how many grants (i.e., servicing opportunities) the queue can accept before being drained. In this way, when the queue is serviced, it is not necessary to perform a head pointer to tail pointer comparison to determine if the queue has been drained. When a cell is scheduled on a queue, the value of this count for the queue preferably will be incremented by one. If a variable size frame is scheduled on a queue, and, if grants are for fixed sized units of data (whether for cell encapsulated parts of the frame or simply parts of the frame that will be reassembled as part of servicing), then the count preferably will be incremented by the size of the frame.

When data arrives at a queue (unicast or multicast root), it is placed in the queuing structure at the tail. Pointers are updated as required. If the queue is unicast (e.g., next leaf points to itself), the count for the data element is set such that after the element is accessed one time that element will be returned to the free list; otherwise the count is set to some maximum value. The queue identifier and an indication of the size of the arriving data unit are passed to the scheduling structure. An exception is that the root queue can be configured to be serviced in the same manner as any of the leaf queues, or the root queue can be configured not to be scheduled. The case of the root queue not being serviced will result in the count associated with the data element being different than it would be if the root were to be serviced such that the element will be accessed one fewer time before being returned to the free list.

Also, when data arrives at a multicast root queue, a pointer to the data element, the size of the data item being queued (if a frame), and a pointer to the next leaf queue (from the root queue context) are placed in the to do list.

There is a maximum rate at which data can arrive at a queuing point - in a cell based system, that maximum rate is equal to one per cell time. A system incorporating features of at least one embodiment of the present invention may be implemented to allow scheduling to occur at greater than that rate, which is preferable, as it can ensure that to-do lists do not become too large. At least one embodiment of the present invention can allow scheduling to occur that frequently by placing queues in the scheduler or incrementing their counts of available data rather than by placing data into the linked lists of the queuing structure itself.

When the system determines that a scheduling event is available (e.g., not being used as a result of data arriving or any other action that might require a scheduling event), the to-do list(s) are checked to determine if there is any data requiring multicasting. If so, a scheduling event is initiated for the leaf queue pointed to, for the size of data specified. The leaf queue context is accessed to determine the next leaf queue. If there is another leaf queue, a count of the number of leaves (associated with the to-do list) is incremented, and the new queue pointer is placed in the to-do list. If the next leaf points at the queue itself, then all copies of the data have been scheduled and the copy count associated with the data element can be updated to reflect this value. In one implementation, the difference between the maximum number of copies possible and the actual number of copies made is subtracted from the count associated with the element. This adjustment to the copy count is made at the same time as the final leaf is being scheduled, and there is a minimum delay before that leaf could be selected to output the piece of data. The result is that the adjustment cannot result in the copy count indicating that no further copies are to be sent - it will indicate that at least one copy remains. Furthermore, once all copies of an item of data have been made, the to-do list entry pertaining to that item is removed from the to-do list.

If a leaf queue is empty when it is serviced from the to-do list, its head pointer is updated to point to the data element queued.

The actions taken during a scheduling event are dependent upon the structure of the scheduler in question; the operation in accordance with embodiments of the present invention is largely independent.

When the scheduler selects a queue to be serviced (in a system implemented in accordance with at least one embodiment of the present invention), the head pointer that is part of the queue context is used to determine the data element to be serviced. Information associated with the data element is used to determine the next data element in the queue (if there is more data in the queue). There is also a copy count value associated with the data element that is adjusted when the data element is accessed for a queue to reflect that one more copy has been sent. When the copy count reaches the value indicating all copies have been sent, the memory space used to store the data element can be returned to the free memory pool.

The scheduler determines whether a queue that it has selected for service needs to be rescheduled for further service based on the associated count of grants required to empty the queue. When the queue is selected, the count preferably is decremented - if it becomes zero, then the queue is empty, and the queue will not be rescheduled. Also the queue context can be updated to indicate that the queue is empty to ensure that the head pointer is updated when the next data item arrives at the queue.

In accordance with at least one embodiment of the present invention, leaf queues can be added and removed dynamically while data is flowing. The copy count associated with each data element reflects accurately the number of queues on which that data element was placed, and the grant count associated with each queue accurately reflects the number of data elements that were placed on that queue. After a queue is removed from the multicast tree, data elements arriving at the root of the multicast tree will receive copy counts consistent with the queue not being a leaf, and the queue will not have its grant count incremented, so that queue will be identified as empty after the last data element that arrived prior to its removal from the multicast tree has been sent. After a queue is added to a multicast tree, data elements arriving at the root of the multicast tree will be given copy counts consistent with the added leaf, and the queue will have its head pointer set to point to the first data element to arrive after the insertion, and its grant count will reflect the data that arrives after the insertion.

The implementation of copy counts for data elements can take different basic forms depending on the relationship between the size of data elements as allocated from the free memory pool and the size of the data unit scheduled. Depending on the system implementing at least one embodiment of the present invention, more than one of these basic forms can be used; for instance, a system may be implemented to support both cell and packet traffic with queuing memory allocated in fixed size blocks. Alternatively, other forms of maintaining copy counts may be used. For example, the decrementing and incrementing of a copy count may be reversed, such that the copy count is decremented in situations where it is otherwise described as being incremented and incremented in situations where it is otherwise described as being decremented, with appropriate arithmetic performed to render the results meaningful (e.g., reversing the minimal and maximal limits and modifying the understanding of the difference between the copy counts and those limits).

If the data elements allocated from memory are the same size as the unit of data scheduled then the preceding description is directly applicable. Examples of this case include an ATM switch in which storage is allocated on a cell-by-cell basis, and a packet switch or router in which storage is allocated as a block large enough for a maximum size packet and which services an entire packet in response to a grant.

If the data elements allocated from memory are larger than the unit of data scheduled, and it is possible to store more than one of the data units in an element, then a variation may be implemented. An example of such a system would be a queuing point within an ATM switch in which memory is allocated in units of some multiple of a cell; however, cells can arrive or be serviced one at a time. In such a case, a single copy count can be maintained for the data element that will be equal to the sum of the copy counts that would be maintained for each individual cell. For such an implementation, the copy count would be configured to be capable to representing the sum of those counts. When a cell is placed in a data element, the copy count preferably is incremented to reflect the maximum number of copies that could be made of that one cell. After all leaves have been notified of the cell's arrival, the copy count is adjusted to reflect the actual number of copies to be made. The memory space used for the data element can only be returned to the free memory pool when all copies of all cells present have been made, which is what the copy count will indicate when it reaches zero (or whatever end point is used in the counting scheme).

If the data elements allocated from memory are smaller than the unit of data scheduled or if the unit of data scheduled is variable in size and can be larger than the unit of memory allocated, then another variation may be utilized. An example of such a scenario is a switch or router supporting variable size packets in which queuing memory is allocated in fixed size blocks smaller than the maximum size of packet supported. In such a system, a number of data elements may be allocated and used to store a packet, with the copy count values of the data elements initiated to reflect the maximum number of copies possible. When the entire packet has arrived, the data elements containing it may be linked to the tail of a root queue and the packet may then be scheduled on the queues that make up a multicast tree. If placed on a to-do list, the pointer is to the first data element (i.e., the data element containing the start of the packet). Once the packet has been scheduled to all leaf queues, the first data element has its context updated with a value reflecting the number of copies made (or, equivalently, the number of copies not made). That is, one data element has its context modified as a direct result of the last copy being scheduled. As leaf queues (which in general may include the root queue) service data elements, the value of the "number of copies made" field is checked and, if greater than zero, stored in queue context until the next packet boundary is reached (i.e., until the entire packet is serviced, when all data elements have been accessed). This value is written into the "number of copies made" field of all subsequent data elements that contain part of the same packet. According to this variant, the determination that all copies of a data element have been sent, and that the data element may be returned to the free memory pool, is based on a comparison of the copy count and the number of copies made fields. According to such a variant, the number of actions (e.g., memory accesses) resulting from an event (e.g., the last leaf of a multicast tree being scheduled) has a fixed maximum value. Specifically, it is not necessary to traverse all data elements holding parts of the packet when the final scheduling event occurs.

In accordance with at least one embodiment of the present invention, one or more to-do queues are used, which require an entry for each unit of data (i.e., each piece of data that individually gets scheduled onto a queue) that has arrived at a root queue but has not yet been scheduled to all leaves. however, such a configuration of to-do queues is not always necessary. For example, for systems in which the location and size of the next element in a queue can be found from the element pointed to in the to-do list entry (e.g., when ATM cells are queued, the next cell is generally pointed to by context associated with the cell, and the size is fixed), it is not necessary to place all cells in the to-do list. As long as one cell is in the to-do list (e.g., the oldest one not fully scheduled yet), once the cell has been scheduled on all leaves, it can be determined if there are additional cells following in the root queue and, if so, the next one can be placed on the to-do list (e.g., at the bottom). In this way, the size of the to-do list limits the number of multicast trees that can be waiting for scheduling rather than the number of cells on multicast trees that are waiting for scheduling.

There may be more than one to-do list instantiated in a system. Doing so allows servicing of different classes of connections in different ways (e.g., prioritization). It also allows for different types of data to be handled in their own preferred manner (e.g., cell and packet data handled differently).

One or more embodiments of the present invention provide a method and apparatus for multicasting of data, for example, cell data or frame data, with the ability to dynamically manage such multicasting. A data structure, referred to as a to-do list, is maintained with entries for enqueued data elements. To-do list entries include a data element pointer identifying the corresponding data element and a leaf to be processed pointer indicating the progression of transmission of the corresponding data element to the plurality of leaves of a multicast tree, wherein the plurality of leaves are used to transmit the data to a plurality of multicast destinations. A method for counting copies of each data element as they are transmitted to each of the plurality of leaves is performed so as to accommodate the addition or deletion of one or more multicast leaves during the multicasting process.

Multicasting provides the ability to receive one source data stream and to provide many destination data streams (e.g., n-1 copies of the source data stream) to the leaves of the multicast tree. In accordance with at least one embodiment of the invention, an ability is provided to change (e.g., add or delete) leaves from the multicast tree while the multicast process is occurring without interfering with that process. The outputs provided are independent in that they may have differing parameters, such as different destinations, different rates, etc. Resources, such as data storage space and space to store related information, are allocated upon arrival of data and are deallocated when all copies of that data have been transmitted. A single instance of each enqueued data element is referenced for transmission of all of the copies, thereby avoiding the need to duplicate the storage of the data element.

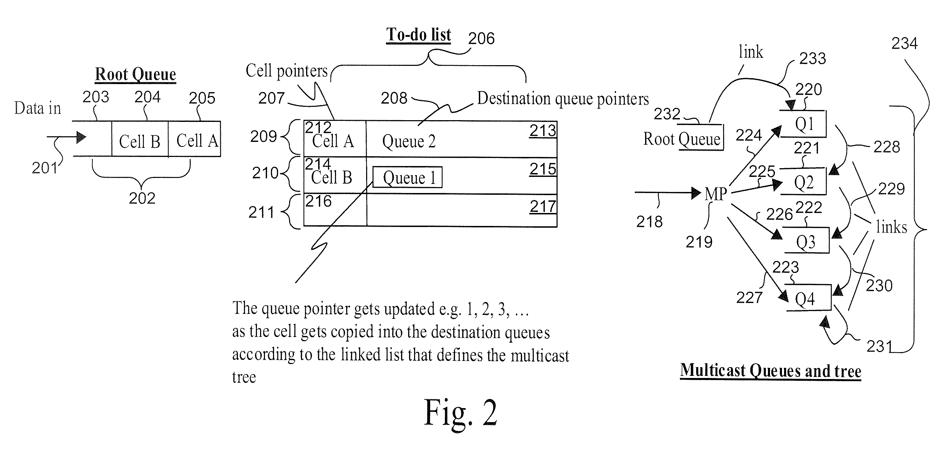

Figure 2 is a block diagram illustrating a method and apparatus for multicasting in accordance with at least one embodiment of the present invention. The apparatus comprises a root queue 202 for storing the data elements to be transmitted in a multicast manner, a "to-do" list 206 for storing pointers to the data elements and destination queues, and a linked list 234 defining the multicast tree. The "to-do" list 206 and linked list 234 defining the multicast tree facilitate dynamic management of multicast destinations.

Root queue 202 comprises a data structure for queuing a plurality of data elements 203, 204, and 205. Additional data elements received from a source data stream 201 are added to root queue 202.

To-do list 206 comprises a data structure comprising data element pointers 207 and their corresponding destination queue pointers 208. As one example, entry 209 of to-do list 206 comprises data element pointer 212 and corresponding destination queue pointer 213. As another example, entry 210 of to-do list 206 comprises data element pointer 214 and its corresponding destination queue pointer 215. As yet another example, entry 211 of to-do list 206 comprises data elements pointer 216 and its corresponding destination queue pointer 217. As additional data elements are received, additional to-do list entries are generated, each having its own respective destination queue pointer.

Figure 2 also includes a diagram illustrating an example of a queuing tree. Source data stream 218 arrives at multicasting point 219 and is forwarded along destination streams 224, 225, 226, and 227 to destination queue 220, 221, 222, and 223, respectively. Root queue 232 associated with source data stream 218 provides link 233, which serves as a head pointer to a linked list 234 of destination queues 220, 221, 222, and 223. Link 233 points to destination queue 220. Link 228 points from destination queue 220 to destination queue 221. Link 229 points from destination queue 221 to destination queue 222. Link 230 points from destination queue 222 to destination queue 223. Tail pointer 231 points from destination queue 223 to destination queue 223.

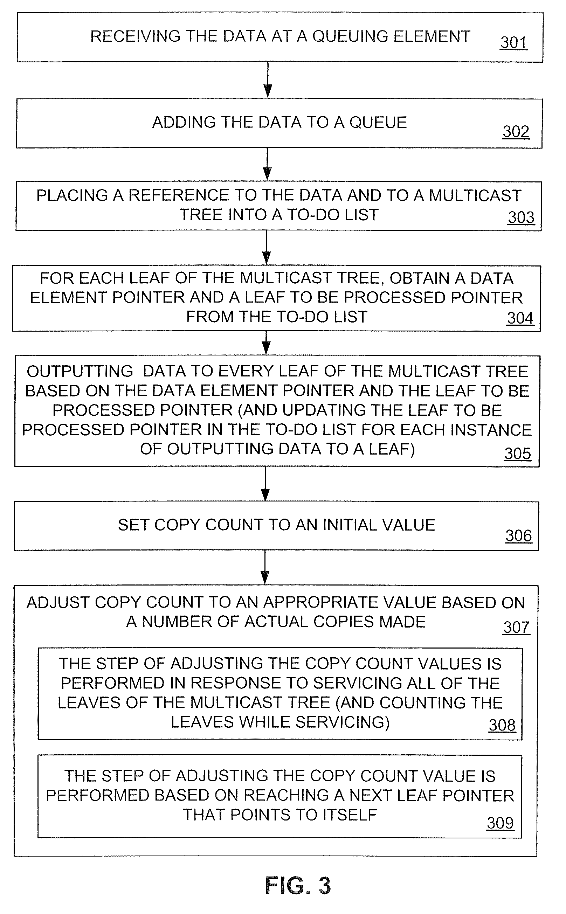

Figure 3 is a flow diagram illustrating a method for multicasting in accordance with at least one embodiment of the present invention. The method begins in step 301. In step 301, data is received at a queuing element. In step 302, the data is added to a queue. In step 303, a reference to the date and to a multicast tree is placed into a to-do list. In step 304, for each leaf of the multicast tree, a cell pointer and a leaf to be processed pointer are obtained from the to-do list. In step 305, data is output to every leaf of the multicast tree based on the cell pointer and the leaf to be processed pointer. Furthermore, the leaf to be processed pointer in the to-do list is updated for each instance of outputting data to a leaf. In step 306, the copy count is set to an initial value. In step 307, the copy count is adjusted to an appropriate value based on a number of actual copies made. Step 307 may include steps 308 and/or 309. In step 308, the step of adjusting the copy count values is performed in response to servicing all of the leaves of the multicast tree. Step 308 may also include counting all of the leaves of the multicast tree while they are being serviced. In step 309, the step of adjusting the copy count is performed based on reaching a next leaf pointer that points to its self.

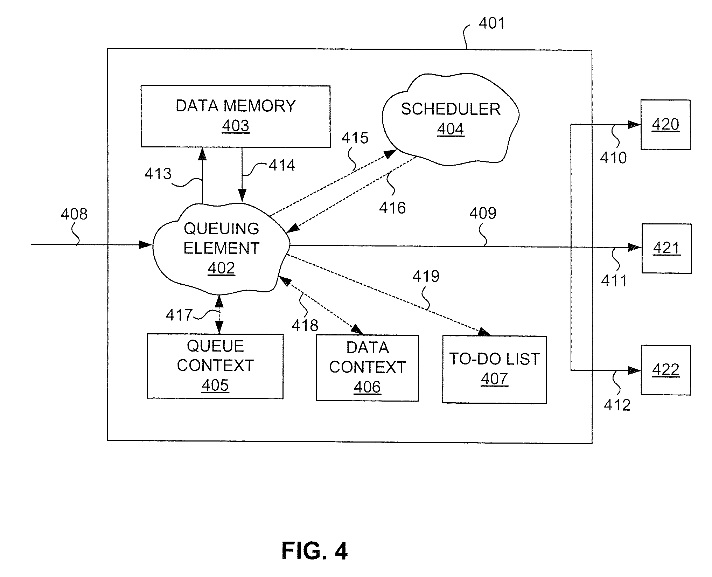

Figure 4 is a block diagram illustrating an apparatus for multicasting in accordance with at least one embodiment of the present invention. The apparatus comprises multicasting point 401 and destination queues 420, 421, and 422. Multicasting point 401 comprises queuing element 402, data memory 403, scheduler 404, queue context 405, data context 406, and to-do list 407. Source data stream 408 is received at queuing element 402. From queuing element 402, incoming data elements received along source data stream 408 are forwarded along output 413 to data memory 403 for storage. Queuing element 402 communicates along link 418 to data context 406 in order to initialize a copy count and update a next data element pointer in accordance with having received a data element at queuing element 402.

An instance of the copy count and the next data element pointer are stored for each enqueued data element. Queuing element 402 communicates with queue context 405 along link 417 in order to update the queue context for the root connection. Such updating may include actions such as setting a head pointer, setting a tail pointer, retrieving a next leaf pointer to determine if the connection pertaining to the received data is a multicast connection. The queue context 405 preferably also maintains a head pointer, although the head pointer is preferably pre-configured. The information stored in queue context 405, such as a head pointer, a tail pointer, a root pointer, and a next leaf pointer, is preferably stored as separate instances for each destination queue.

If the connection is a multicast connection, queuing element 402 communicates along link 419 with to-do list 407 in order to store an appropriate context into the to-do list 407. To-do list 407 preferably contains a value representing the number of leaves in the multicast tree, as well as a list of data element pointers and leaf to be processed pointers. While only one instance of the value representing the number of leaves in the multicast tree need be stored, an instance of the data element pointer and the leaf to be processed pointer are preferably stored for each enqueued data element.

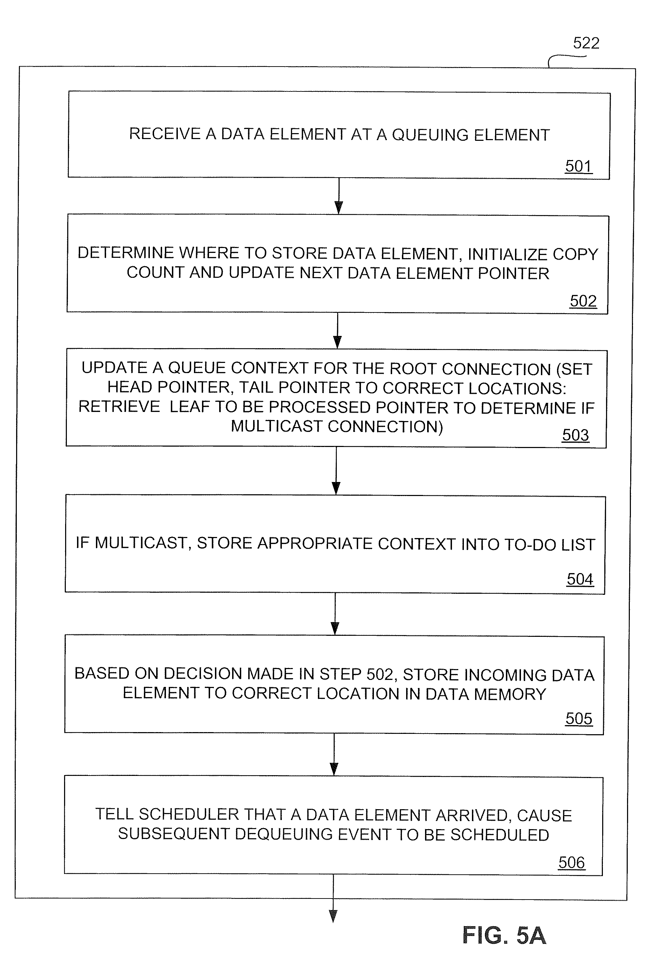

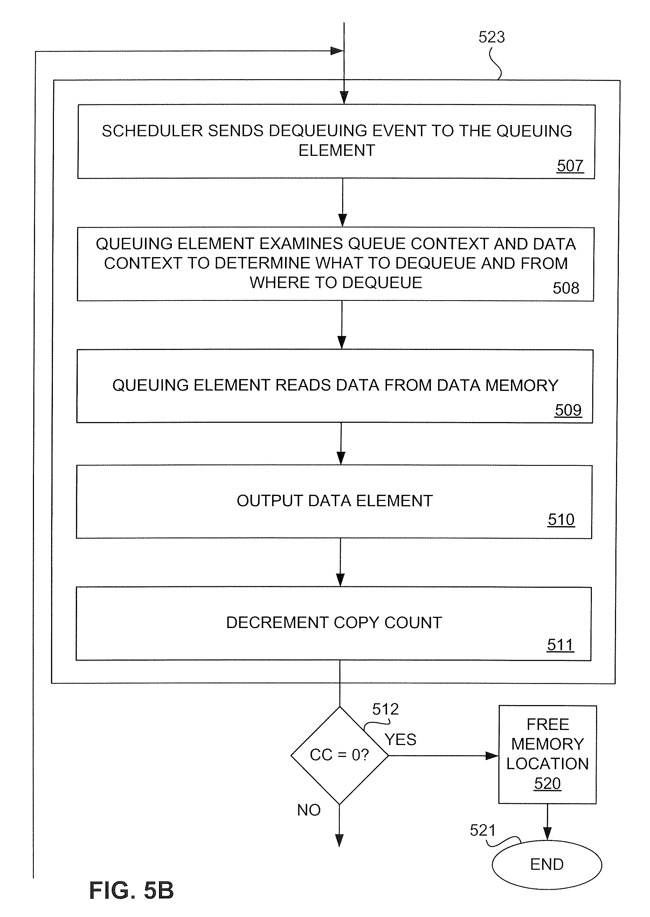

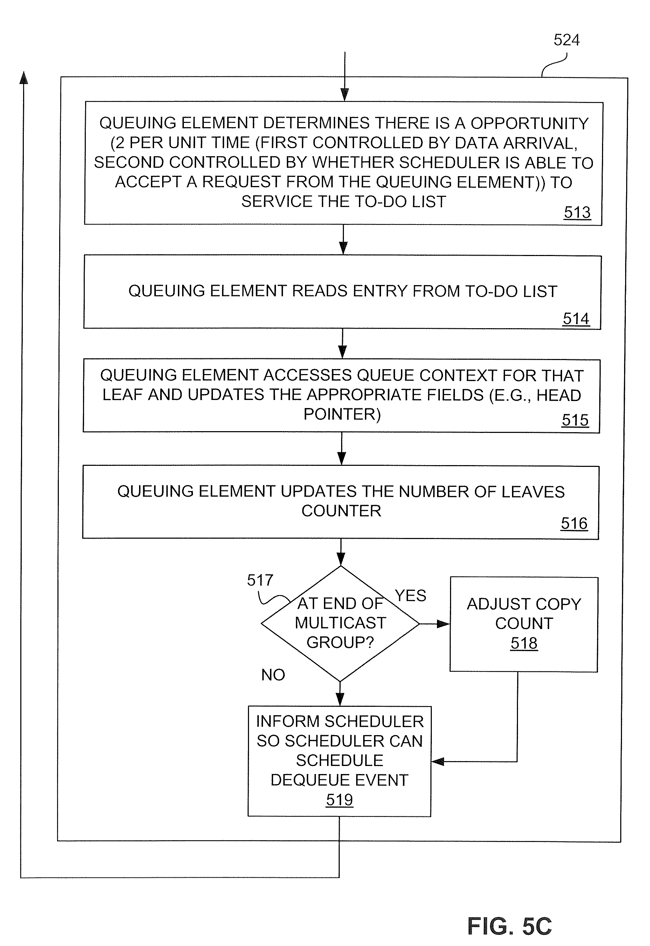

Queuing element 402 communicates along output 415 to scheduler 404 to advise scheduler 404 that the data element has arrived and to schedule a subsequent dequeuing event to occur. Scheduler 404 communicates along input 416 of queuing element 402 to send a dequeuing event to the queuing element 402. Queuing element 402 examines information in queue context 405 and data context 406 to determine what data element shall be dequeued and from where it shall be dequeued. Queuing element 402 receives the data element along input 414 from data memory 403. Queuing element 402 outputs the data element along output 409 to destination queues 420, 421, and 422, along destination data streams 410, 411, and 412, respectively. The elements of multicasting 401 may further perform additional steps in accordance with the method described below in reference to Figures 5A, 5B, and 5C.

Figures 5A, 5B, and 5C are a flow diagram illustrating a method for multicasting in accordance with at least one embodiment of the present invention. The method comprises 522, which may include steps 501, 502, 503, 504, 505, and 506. In step 501, a data element is received at a queuing element. In step 502, a determination is made as to where to store the data element, a copy count value is initialized, and a next data element pointer is updated. In step 503, a queue context for the root connection is updated. Such updating may include setting a head pointer to a correct location, setting a tail pointer to a correct location, and retrieving a "leaf to be processed" pointer to determine if the connection pertaining to the data element is a multicast connection. In step 504, if the connection is a multicast connection, and appropriate context is stored into the to-do list. In step 505, based on the decision made in step 502, an incoming cell is stored to a correct location in the data memory.

In step 506, the scheduler is informed that a data element has arrived, and a subsequent queuing event is to be scheduled. From step 522, the process continues to step 523. Step 523 may comprise steps 507, 508, 509, 510, and 511. In step 507, the scheduler sends a dequeuing event to the queuing element. In step 508, the queuing element examines the queue context and data context to determine what data element is to be dequeued and from where it shall be dequeued. In step 509, the queuing element reads data from the data memory. In step 510, the queuing element outputs a data element. In step 511, the copy count is decremented. From step 523, the process continues to step 512. In step 512, a decision is made as to whether or not the copy count equals zero. If the copy count equals zero, the process continues to step 520. In step 520, the memory location is freed. From step 520, the method continues to step 521, where the method ends. If, in step 512, the copy count does not equal zero, the process continues to step 524.

Step 524 may include steps 513, 514, 515, 516, 517, 518, and 519. In step 513, the queuing element determines that there is an opportunity to service the to-do list. In at least one embodiment, there are two such opportunities per unit time. For example, a first such opportunity may be controlled by data arrival, while a second such opportunity may be controlled by whether the scheduler is able to accept a request form a queuing element. In step 514, the queuing element reads an entry from the to-do list. In step 515, the queuing element accesses the queue context for the leaf corresponding to the entry read from the to-do list in step 514 and updates the appropriate field. For example, the queuing element may update the head pointer. In step 516, the queuing element updates the number of leaves counter. In step 517, a determination is made as to whether or not the end of the multicast group has been reached. If the end of the multicast group has been reached, the process continues to step 518, where the copy count is adjusted. From step 518, the process continues to step 519. If, in step 517, the end of the multicast group has not been reached, the process continues to step 519. In step 519, the scheduler is informed such that the scheduler can schedule a dequeue event. From step 519, the process returns to step 523.

Determining the number of copies of data element that are created and transmitted to individual leaves of a multicast tree can become complicated if leaves are being added to the multicast tree or deleted from the multicast tree during the multicasting process. To avoid such potential confusion, it is desirable to initialize a copy count at a maximum value (i.e., a value sufficiently high to prevent the actual number of copies made from exceeding it). For example, if no more than 500 copies are expected to be made (e.g., for a multicast tree with no more than 500 leaves), a value such as 511 could be used as such a maximum value. The copy count is set to a value equal to the copy count minus a quantity equal to the maximum value minus the number of leaves minus one. The copy count is decremented each time data is transmitted (e.g., each time data is transmitted to the root or any of the leaves). The copy count reflects the number of copies of a data element that have not been made, and, as such, will not result in an out-of-range value or other complication, yet readily allows determination of the number of copies made and transmitted. Thus, effectively, the copy count is set (e.g., for each data element) based on the number of copies actually enqueued for that data unit.

The copy count may be practiced in a variety of ways within the scope of at least one embodiment of the present invention. For example, it may be decremented from a maximum value or it may be incremented from a pre-defined value. Also, the maximum value is preferably substantially more than the maximum number of cells that can practically be processed. For example, the maximum value may be more than 1.1, 1.2, 1.3, 1.4, 1.5, 1.6, 1.7, 1.8, or 1.9 times the number of cells that can be processed or it may be more than twice the number of cells that can be processed.

In accordance with at least one embodiment of the invention, a method of multicasting according to the present invention comprises several steps set forth below. Whenever a data element, such as a cell or frame, arrives into any queue, the queue is interrogated to determine if it is a root queue. If the queue is a root queue, then a pointer to the data element (and optionally the size of the data element) and a queue pointer to the first destination queue is written into the "to-do" list. Cells having entries in the "to-do" list are copied onto the destination queues according to the queue pointer in the "to-do" list. Responsive to copying a cell to a destination queue, the queue pointer is updated according to the linked list that define the multicast tree. Upon reaching the end of the destination tree, the cell entry is removed from the "to-do" list.

A method such as that described above is useful in that a multicast tree can be modified in real-time (i.e., during multicast operation) to add and/or delete multicast destinations. Furthermore, a separate process (or dedicated processor) can be used to service the destination queues according to the "to-do" list. Hence, the multicast function can be achieved without adverse effects on other operations of a switch/router.

In accordance with at least one embodiment of the invention, it is preferable to implement multicasting apparatus capable of processing the data as rapidly as possible since the apparatus performs multicasting to the destinations serially, so a more rapid ability to perform updating of one data element per event provides greater system performance. It may also be preferable to control the size of a multicast tree in order to control the amount of time for scheduling all of the leaves of the tree. Note that since the output bandwidth of the system is constrained, the rate of data elements multiplied by the numbers of copies made of those data elements is finite.

For the root connection, data comes into queuing element. The queuing element decides where in the data memory to store the data. Queue context memory used to store the connections to which data is destined. Data context is used to store information as to where data is actually stored in the data memory. The queuing element also tells scheduler that data has arrived.

For unicast connections, the scheduler instructs the queuing element to dequeue data for the root connection. The queuing element then reads data from data memory and sends it out to its unicast destination.

For multicast connections, to-do list is used to process leaf connections. When the queuing element is ready to process data for a leaf, it looks to the to-do list to determine which leaf should be selected for the queuing element to process data for next. Then, the queuing element accesses the queue context and the data context to determine from where in the data memory the desired data is stored and to where the desired data shall be sent. The queuing element will ensure that the head pointer of the queue context is adjusted and that the next cell pointer of the data context points to the correct cell. The queuing element informs the scheduler as to which cell it has accessed and requests the scheduler to provide it with a dequeuing event. When the scheduler schedules the dequeuing event, the queueing element dequeues the cell and sends the data to the designated destination in accordance with the schedule.

In accordance with at least one embodiment of the invention, a number of multicast groups as large as the size of the to-do list may be supported. Multiple traffic priorities may be implemented using multiple to-do lists. Also, units of memory that are allocated and deallocated may be large enough for multiple cells, in which case the copy count is used to represent the sum of the copy counts for the individual cells.

Several properties of the data structures established in accordance with at least one embodiment of the present invention may be used beneficially. For example, a root pointer may be used to identify the first leaf of the multicast tree. For the root queue, a leaf is determined to be empty if its head pointer points to the same location as its tail pointer. For the leaves, the head pointer is compared with the root queue tail pointer to determine if a leaf is empty. An additional cell may be added to the to-do list after processing of the previous cell is completed (e.g., by following the root pointer). Any leaves to be deleted are preferably deleted after a cell has been processed for all of the leaves.

At least one embodiment of the invention may be used in the case where the data elements are frames (e.g., not cells). In such a case, the to-do list preferably has a reference to the start of a frame rather than to a cell. Additionally, size of frame information is also maintained and passed to the scheduler. Rather than subtracting the maximum number of copies minus the number of leaves minus one from the copy count, as would preferably be done in the case of cells, the value maximum number of copies minus the number of leaves minus one is stored as a field associated with the block of storage as a "zero count." When the copy count is decremented until it equals the zero count, then all copies have been transmitted to their respective leaves, and the storage may be released. Whenever storage is released or deallocated, it is made available to be used for other storage needs, such as additional incoming data or other information. Pointers and other housekeeping mechanisms for tracking usage of storage may then be adjusted to indicate such release or deallocation. Because a frame may involve several blocks of memory, each block of memory is preferably provided with its own copy count, which avoids the need to access all of the relevant blocks of memory in order to calculate a copy count.

Accordingly, a method and system for multicasting of cell traffic or frame traffic has been described. It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the spirit and scope of the basic underlying principles disclosed and claimed herein.

## Claims

1. A method for multicasting data comprising:
adding (302) the data to a queue;
placing (303) a reference to the data and to a multicast tree into a to-do list;
for each of the leaves of the multicast tree, obtaining (304) a data element pointer and a leaf to be processed pointer from the to-do list; and
scheduling the data to be output to each of the leaves of the multicast tree based on the data element pointer and the leaf to be processed pointer.

2. The method of claim 1 further comprising:
updating (305) the leaf to be processed pointer in the to-do list for each instance of scheduling the data to be output to each of the leaves.

3. The method of claim 2 further comprising:
setting (306) a copy count to an initial value;
adjusting (307) the copy count based on a number of actual copies made.

4. The method of claim 3 wherein the step of setting the copy count to the initial value further comprises:
setting the copy count to a maximum value initially, and
wherein the step of adjusting the copy count further comprises:
decrementing the copy count for each of the actual copies made.

5. The method of claim 3 wherein the step of adjusting the copy count is performed in response to the step of scheduling the data to be output to each of the leaves of the multicast tree.

6. The method of claim 4 wherein the step of scheduling the data to be output to each of the leaves of the multicast tree further comprises:
counting every one of the leaves of the multicast tree.

7. The method of claim 4 wherein the step of adjusting the copy count is performed based on reaching a leaf to be processed pointer that points to itself.

8. A method for multicasting data comprising:
adding the data to a queue as enqueued data;
transmitting the enqueued data to each of a plurality of multicast destinations;
determining that all of the enqueued data for a particular destination of the multicast destinations have been transmitted.

9. A method for multicasting data comprising:
storing queue context information and data context information pertaining to the data;
determining which of the data to transmit as output data and a destination to which it shall be transmitted based on the queue context information and the data context information;
transmitting the output data to the destination;
determining a number of destinations to which the output data has been transmitted; and
determining a number of destinations intended to receive the output data.

10. The method of claim 9 further comprising:
when the number of destinations to which the output data has been transmitted indicates that the output data has been transmitted to the number of destinations intended to receive the output data, concluding the queuing of the output data.

11. The method of claim 10 further comprising:
updating the queue context information for a root connection.

12. The method of claims 11 further comprising:
obtaining a data element pointer and a leaf to be processed pointer from a to-do list, wherein the step of determining which of the data to transmit as the output data is based on the data element pointer and the leaf to be processed pointer.

13. The method of claim 12 further comprising:
updating a number of leaves counter.

14. The method of claim 12 further comprising:
adjusting a copy count, wherein the copy count is used to determine the number of destinations to which the output data has been transmitted.

15. The method of claim 14 wherein the step of adjusting the copy count further comprises:
decrementing the copy count for each of the number of destinations to which the output data has been transmitted, wherein the copy count had been initialized to a maximum value.

16. Apparatus for multicasting data comprising:
a queuing element (402) for receiving the data and for transmitting the data to a plurality of multicast destinations via a plurality of destination queues (420, 421, 422);
a memory subsystem for storing the data, queue context information pertaining to a root connection, data context information pertaining to the data, a data element pointer, and a leaf to be processed pointer; and
a scheduler (404) for scheduling a dequeuing event for the data.

17. The apparatus of claim 16 wherein the memory subsystem comprises:
a data memory (403) for storing the data;
a queue context block (405) for storing queue context information for each of the destination queues (420, 421, 422);
a data context (406) block for storing data context information for each of the data elements of the data; and
a to-do list (407) for storing the data element pointer and the leaf to be processed pointer.

18. The apparatus of claim 17 wherein the data context information comprises:
a copy count for counting events of transmitting the data; and
a next data element pointer for indicating a next data element of the data to be processed.

19. The apparatus of claim 18 wherein the queue context information comprises:
a head pointer;
a tail pointer; and
a root pointer.

20. The apparatus of claim 19 wherein the to-do list further comprises:
a leaf count for counting destination queues to which the data shall be transmitted.
